(19) Europäisches Patentamt
European Patent Office
Office européen des brevets

(11) EP 2 290 495 A1

(12) EUROPEAN PATENT APPLICATION

(43) Date of publication:
**02.03.2011 Bulletin 2011/09**

(51) Int Cl.:
***G06F 1/26*** *(2006.01)* ***G06F 1/32*** *(2006.01)*

(21) Application number: **09305799.0**

(22) Date of filing: **28.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicants:
- **ST-Ericsson (France) SAS**
  **38000 Grenoble (FR)**
- **ST-Ericsson SA**
  **1228 Plan-les-Ouates (CH)**
- **St Ericsson Inc.**
  **Carrolton, TX 75006 (US)**

(72) Inventors:
- **Cimaz, Lionel**
  **35137, PLEUMELEUC (FR)**
- **Cheng, Shanfeng**
  **AUSTIN, TX 78735 (US)**

(74) Representative: **Cabinet Plasseraud**
**52, rue de la Victoire**
**75440 Paris Cedex 09 (FR)**

# (54) Method of and apparatus for managing power consumption in an electronic device

(57) A method of and device for managing power consumption in an electronic device, the electronic device having a power regulator and a function powered at least partially by the power regulator, the power regulator operable in a low power mode and a full power mode, the method comprising: the power regulator operating in a low power mode; monitoring the current drawn from the power regulator in order to determine if the drawn current exceeds a threshold current level indicating a current limitation mode; and switching the power regulator to the full power mode if the current limitation mode is detected.

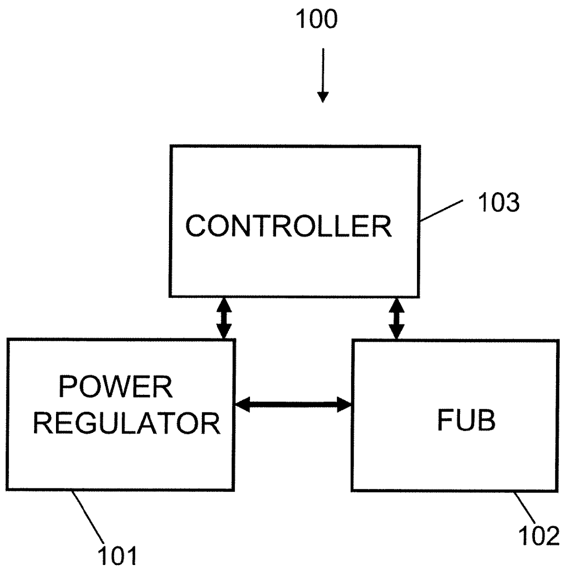


FIG. 1

EP 2 290 495 A1

## Description

### Field of the Invention

The present invention relates in general to a method and an apparatus for managing power consumption in an electronic device. More particularly, the invention relates to a method and an apparatus for managing power consumption in a circuit having a power regulator.

### Background of the Invention

With the development of faster and more powerful processors in many electronic devices power consumption has become an issue of increasing importance, in particular with regard to mobile electronic devices with limited power sources. Mobile devices such as, but not limited to, mobile telephones, personal data appliances, personal digital assistants (PDAs), lap top computers and the like, are sometimes required to operate for long periods of time before their power source can be recharged.

Such portable devices generally include a number of power regulators in order to provide power supply to different functional units of the device. For some functions, when they are not in use, the power supply can be shutdown leading to a reduction in leakage current. For some other functions, however the power supply should not be completely shutdown because some units such as latches or memory cells may need to retain their stored value. Such a function is sometimes referred to as an « always up function». The leakage current of such always up functions when they are not in use can often be so low that the dominant current consumer of the power supply path is the regulator internal circuitry. Since the regulator does not need to provide high current, it commonly has a specific low power mode. In such cases, the regulator biasing current becomes significantly lower than when in full power mode, thereby decreasing the overall current consumption of the power path. A drawback however is that, in low power mode the regulator is not able to provide a high current (typically 2-5mA in low power, 100mA in full power).

In some cases the embedded software of the product determines whether or not a power regulator can be placed in low power depending on whether the product is using the functions coupled to it. Problems may, however, appear if a function connected to a regulator is able to reengage high current consumption by itself even if the function is being not in used in the system. This may be the case, for example, if the function control is shared between two cores or if the end-user is able to interact with the function without passing through the main core. In such a case since the power regulator is configured in low power mode, it will not be able to provide enough current to the function for the function to operate properly. Such a scenario may therefore lead to a collapse in the power supply path and as a consequence the function will loose its power supply resulting in undesirable performance or erroneous operations.

A similar type of problem may appear if an undefined delay exists between the end of usage of a function and its effective reduction of current consumption (SD card cashed erase for example). In this situation, software may switch the regulator to low power mode too early resulting in a collapse of the power supply.

One approach is to constantly keep the regulator connected to shared functions in full power mode in order to avoid any power supply collapsing. However, keeping the regulator constantly in full power mode can lead to an overconsumption of current.

Another approach involves introducing time delays before switching a regulator from full to low power mode in case the attached function has a delay between end of usage and low current consumption. However, when the function delay between the end of usage and low current consumption is undefined or variable, the delay in switching the attached regulator from full to low power may not be optimized but simply as long as the maximum delay of the function. This may lead to a non optimum power consumption optimization.

### Summary of the Invention

In view of the foregoing, a first aspect of the invention provides a method of managing power consumption in an electronic device, the electronic device having a power regulator and a functional unit powered at least partially by the power regulator, the power regulator being operable in a low power mode and a full power mode, the method comprising: operating the power regulator in a low power mode; monitoring the current drawn from the power regulator in order to determine if the drawn current exceeds a threshold current level indicating a current limitation mode; and switching the power regulator to the full power mode if the current limitation mode is detected.

A second aspect of the invention provides a device for managing power consumption, the device comprising: a power regulator for supplying power to a functional unit, the power regulator being operable in a low power mode and a full power mode; a current monitor for monitoring the current drawn by at least one functional unit from the power regulator; a detector for determining if the drawn current exceeds a threshold current level indicating a current limitation mode; and a controller for switching the power regulator to the full power mode if the current limitation mode is detected.

The methods according to the invention may be computer implemented. The methods may be implemented in software on a programmable apparatus. They may also be implemented solely in hardware or in software, or in a combination thereof.

Since at least parts of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

## Brief Description of the Drawings

Embodiments of the invention will now be described, by way of example only, and with reference to the following drawings in which:-

Figure 1 is a block diagram of an apparatus for managing power consumption of a circuit according to an embodiment of the invention;

Figure 2 is a flow chart of a method of managing power consumption of a digital circuit according to the embodiment of the invention;

Figure 3 is a flow chart of a method of managing power consumption of a circuit according to the embodiment of the invention; and

Figure 4 is a block diagram of part of the circuitry for managing power consumption of a circuit according to an embodiment of the invention.

## Detailed description

In the description which follows, for purposes of explanation and not limitation, specific details are set forth such as particular structures, architectures, interfaces, techniques, etc. in order to provide a thorough understanding of the various aspects of the invention. However, it will be apparent to those skilled in the art having the benefit of the present disclosure that the various aspects of the invention may be practiced in other examples that depart from these specific details. In certain instances, descriptions of well-known devices, circuits, and methods are omitted so as not to obscure the description of the present invention with unnecessary detail.

A method of an apparatus for managing power consumption in an electronic device, according to an embodiment of the invention will be described with reference to Figures 1 to 4.

Figure 1 is a block diagram of a first embodiment of circuitry for managing power consumption. Such circuitry may form part of a GSM, GPRS or EDGE chipset of a wireless communication device, for example, but it will be appreciated that the circuitry is not limited thereto and may be applied in any digital device or processing system where it is desirable to reduce power consumption. The circuit 100 includes a power regulator 101 for controlling the supply of power to a functional unit block 102 , and a control module 103 for controlling operation of the power regulator 101.

The functional unit block 102 in this embodiment is an always up type function such as but not limited to a memory cell which should always receive a level of power. The functional unit block 102 is operable in a plurality of operating modes such as an idle mode in which the functional unit block does not perform its full function and in which less current is drawn; and an active mode in which the function unit block requires more current in order to perform a function.

The power regulator 101 is configured to operate in at least two power supply modes, a low power mode in which the power regulator provides a low current output to drive the one or more function unit blocks to which it is coupled and a full power mode in which the power regulator provides its full power capability for driving the one or more function unit blocks. Although in Figure 1 the power regulator 101 is illustrated as being only attached to one functional block 102, it will be appreciated that in some embodiments of the invention the power regulator may be coupled to and supply power to more than one functional unit block. In this embodiment the power regulator 101 is configured, when operating in the low power mode, to indicate by means of a current limitation mode status signal that the level of current drawn from the power regulator 101 by the function unit block 102 is reaching the full current capability of the power regulator 101 in the low power mode. This is achieved in this embodiment by monitoring the current drawn by the functional unit block 102 and comparing the level of current drawn by the function unit block 102 with a threshold current level. The threshold current in this embodiment is set to a level just below the level of current that the power regulator 101 is capable of providing in low power operating mode. In some embodiments of the invention the current limitation mode status signal is also available in the high power operating mode to indicate that the level of current being drawn exceeds the current providing capability of the low power operating mode, or has fallen within the current providing capability of the low power operating mode enabling the power regulator to be switched back to the low power mode.

The control module 103 is operable to monitor the current limitation mode status signal in order to determine if the level of current being drawn by the function unit block 102 is close to exceeding the current capabilities of the power regulator 101 in low power mode and thereby indicating the lower power mode is not able to provide sufficient current to the function unit block 102 for the required operations of the function unit block 102. In alternative embodiments of the invention the control module may directly monitor the current being drawn from the power regulator 101 in order to determine if the current being drawn is close to exceeding the capability of the power regulator in a low power operating mode.

The control module 103 is operable to switch the power regulator to full power mode if current limitation mode status signal indicates the drawn current mode has exceeded the preset current threshold and that the power regulator 101 is in a current limitation mode.

Operation of the circuitry will now be described with reference to Figure 2. In step S11 the power regulator 101 is operating in low power operating mode. In step S12 while the power regulator operates in the low power operating mode the control module 103 continuously monitors the current limitation mode status signal provided by the power regulator 101 in order to determine if a level of current exceeding the level of current capable of being provided by the power regulator 101 in the low power operating mode is required by the function 102.

Function unit block 102 switches to an active operating mode to perform one or more operations and begins to draw more current from power regulator 101. Since the current level required by the functional unit block 102 to perform the required operation exceeds the current supply capability of the power regulator 101 in low power mode, the current being drawn from power regulator 101 increases and exceeds the current threshold triggering the current limitation mode status signal to indicate the current limit is close to being exceeded. It is thus determined in step S13 that the current drawn has exceeded the current threshold level. The control module 102 in step S14 detects that the current limitation mode has been engaged and switches the power regulator to full power operating mode in step S15.

Since the switching between power operating modes depends on a current limitation event and not on the regulation voltage of the power regulator 101, the regulator output voltage does not have to significantly decrease. In fact, the output capacitor of the power regulator 101 can sustain the output voltage at the transition. Thus the function unit 102 powered by the power regulator 101 does not suffer any voltage drop in the power supply.

When the full power mode of the power regulator 101 is re-engaged a configuration controller of the power regulator 101 can be informed of this event using for example processor interruption.

If the functional unit block 102 ceases to perform the function and the required current level falls to a level within the current supply capability of the power regulator 101 in low power mode, the control module 103 can switch the power regulator 101 back to low power mode. Monitoring of the drawn current for triggering the current limitation mode can then be restarted.

In alternative embodiments of the invention the control module 103 can check directly to see of the function unit block 102 has restarted operations by itself and accordingly switch the power regulator 101 to full power mode if necessary.

If the feature of automatically switching to full power mode in response to an increase in drawn current is enabled while the power regulator 101 is OFF or disabled, the switch to full power mode may be systematically forced at enabling/switching on the power regulator. When the power regulator is OFF, its output voltage is close to 0V. On enabling, the voltage of the power regulator should be increased to the power regulator target voltage. However the regulator output capacitor slows down the increase in voltage. This can result in the power regulator being driven to its current limitation level where the current exceeds the current limitation threshold thereby indirectly triggering an automatic switch to full power operation. This could lead to the full power mode being systematically enabled.

Some power regulators can be adjusted in term of regulation output voltage. If the feature of automatically switching to full power mode is enabled while a increasing voltage change is requested, the switch to full power mode may be systematically forced. This is because the output capacitor of the power regulator can slow down the transition from the lower voltage to the higher voltage. This can result in driving the regulator to its current limitation point which may indirectly trigger the switch to full power mode thereby reengaging the full power mode systematically.

In view of these potential scenarios in some embodiments of the invention the circuitry may include a masking mechanism for masking the current limitation status of the power regulator before the power regulator is automatically switched to full power mode. Such a masking mechanism will now be described in more detail with reference to Figures 3 to 4.

In step S21 the power regulator is enabled or an increase in output voltage is requested. In response to either of these events the current limitation status is masked in step S22 (i.e. the power regulator is prevented from automatically switching from the low power mode to the high power mode if the drawn current exceeds the current limitation threshold) The power regulator is switched to full power mode and a timeout counter is started. The capacitor of the power regulator charges up in step S23 in response to the switching on of the power regulator or in response to the increase in output voltage. After a predetermined time period has expired in step S24 the control module reengages monitoring of the current limitation status signal. If it is determined in step S25 that the current being drawn from the power regulator exceeds the current limtation threshold the control module maintains the power regulator in high power mode in S26A. If alternatively the current drawn from the power regulator does not exceed the current threshold level the power regulator is switched to low power operating mode in step S26B.

Thus if the power regulator is not effectively over-loaded by a powered function to which it is coupled, at some point the output capacitor of the power regulator will be fully charged and the regulator current limitation mode will stop. When this event happens (which can be sensed using the associated regulator status signal), the masking is cleared allowing the « automatic full power » function to work properly.

If regulator remains in current limitation mode when the time out counter passes a well chosen threshold, it will be deduced that the powered function is effectively overloading the power regulator. In fact, the time to start-up the regulator or achieve a voltage is limited and can be defined as a direct function of the current provided by the regulator in current limitation mode ($i_{lim}$), the maximum load current on the regualtor ($i_{max}$), the output voltage ($V_{out}$) and the value of the regulator output capacitor ($C_{out}$): time = $C_{out}$ x $V_{out}$ / ($i_{lim}$-$i_{max}$). Thus, if the power regulator remains in current limitation mode for a longer time, this can signify that one or more functions are drawing more current than what the power regulator is capable of supplying in low power mode. In such a situation, the masking is cleared and the effective current limitation mode will indicate that full power mode is required and the power regulator will be automatically switched to the full power mode.

Thus if the power regulator is enabled or an increase in regulator voltage is requested, two events which do not necessarily signify an increase need of power from the function unit block, the current limitation status from the power regulator is masked.

During the masking period, nothing prevents the powered functions from drawing a current level that exceeds the current level corresponding to the low power mode of operation of the power regulator. The power regulator is thus maintained in full power mode during the entirety of the masking period, for the transition from disable to full enable or during an increase in voltage of the power regulator. In such a case, since the power regulator is operating full power, no power collapsing is likely to occur if the powered function passes from a non-active to an active mode of operation during the transition. Moreover, since the transitions are performed in full power mode, a faster change and a better control of time-out threshold may be achieved.

The masking mechanism can be achieved using the circuit of Figure 4. The design may use asynchronous logic for the « automatic full power » path in order to minimize the reaction time. The masking mechanism (Overload masking SM) can be managed by a clocked state machine as shown in Figure 4.

In embodiments of the invention in order to avoid power collapse, the power regulator is switched to full power mode if the low power mode is insufficient for providing the desired load current. Embodiments of the invention are thus able to provide sufficient power supply to a function even if the power regulator is initially in a low power supply mode of operation when the function is in need of the required power. By virtue of the reactive manner in which the full power supply mode is reengaged, the regulator can operate in low power operating mode most of the time except for when extra current is required. Consequently power consumption is reduced, thereby extending battery life while providing reliable performance.

Moreover, since switching between operating power modes is determined by a current limitation event rather than the regulation voltage, the regulator output voltage does not need to significantly fall. In fact the regulator capacitor can sustain the output voltage during transition. Thus the function powered by the regulator will not detect any problem to their power supply.

The circuitry described above may be disposed in an integrated circuit (IC) such as a system on a chip, and the IC may be incorporated into a system.

The method according to the embodiments of the invention can find applications in the management of power consumption in electronic devices such as wireless mobile devices such as those comprising integrated circuits implementing EDGE, GSM or GPRS technology.

Although the present invention has been described hereinabove with reference to specific embodiments, the present invention is not limited to the specific embodiments, and modifications will be apparent to a skilled person in the art which lie within the scope of the present invention that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of managing power consumption in an electronic device, the electronic device having a power regulator and a functional unit powered at least partially by the power regulator, the power regulator being operable in a low power mode and a full power mode, the method comprising:

    operating the power regulator in a low power mode;
    monitoring the current drawn from the power regulator in order to determine if the drawn current exceeds a threshold current level indicating a current limitation mode; and
    switching the power regulator to the full power mode if the current limitation mode is detected.

2. A method according to claim 1, wherein the threshold current level is set to be less than the regulator current capability in low power mode.

3. A method according to claim 1 or 2, further comprising monitoring activity of the functional unit and wherein if it is determined that the activity of the functional unit has been to reduced to an activity level which can be powered sufficiently by the power regulator in the low power mode, the power regulator is switched back to the low power mode.

**4.** A method according to any one of the preceding claims, wherein if the power regulator is enabled from an idle state, or if the output voltage of the power regulator is increased, the steps of monitoring the current and switching the power regulator to full power mode if current limitation is detected are masked.

**5.** A method according to any one of the preceding claims, wherein if the power regulator is switched on or if the output voltage of the power regulator is increasing, the power regulator is placed in high power mode for a preset time period.

**6.** A method according to claim 5, wherein after the preset time period is expired the power regulator remains in full power mode if the drawn current exceeds the threshold current level, otherwise the power regulator is switched to low power mode.

**7.** A method according to claim 5 or 6, wherein the preset time period T has a duration T defined according to:

$$T = C_{out}*V_{out}/i_{lim}-i_{max}$$

where:

$C_{out}$ refers to the capacitance of the output capacitor of the power regulator
$V_{out}$ refers to the output voltage of the power regulator
$i_{lim}$ refers to the current level of the power regulator indicating the current limitation mode
$i_{max}$ refers to the maximum load current of the power regulator

**8.** A device for managing power consumption, the device comprising:

a power regulator for supplying power to a functional unit, the power regulator being operable in a low power mode and a full power mode;
a current monitor for monitoring the current drawn by at least one functional unit from the power regulator;
a detector for determining if the drawn current exceeds a threshold current level indicating a current limitation mode; and
a controller for switching the power regulator to the full power mode if the current limitation mode is detected.

**9.** A device according to claim 8, wherein the threshold current level is set to be less than the current capability of the power regulator in low power mode.

**10.** A device according to claim 8 or 9, wherein the controller is operable to monitor activity of the functional unit in order to determine if the activity of the functional unit has been to reduced to an activity level which can be powered sufficiently by the power regulator in the low power mode, and is further operable to switch the power regulator to the low power mode if it is determined that the activity of the functional unit has been to reduced to an activity level which can be powered sufficiently by the power regulator in the low power mode.

**11.** A device according to any one of claims 8 to 10, wherein the controller is operable to prevent a current limitation mode being detected while the power regulator is being enabled from an idle state, or while the output voltage of the power regulator is being increased.

**12.** A device according to any one of claims 8 to 11, wherein the controller is operable to place the power regulator in the high power mode for a preset time period if the power regulator is enabled or if the output voltage of the power regulator is increased.

**13.** A device according to any one of claims 8 to 12 wherein the controller is operable to, after the preset time period is expired, maintain the power regulator in full power mode if the drawn current exceeds the threshold current level, or otherwise switch the power regulator to low power mode.

**14.** A device according to claim 12 or 13 wherein, wherein the preset time period T has a duration T defined according to:

$$T = C_{out}*V_{out}/i_{lim}-i_{max}$$

where:

$C_{out}$ refers to the capacitance of the output capacitor of the power regulator
$V_{out}$ refers to the output voltage of the power regulator
$i_{lim}$ refers to the current level of the power regulator indicating the current limitation mode
$i_{max}$ refers to the maximum load current of the power regulator

**15.** A wireless communication device including a device for managing power consumption of the wireless communication device according to any of claims 8 to 14.

**16.** A computer-readable medium having computer-executable instructions to enable a computer system to perform the method of any one of claims 1 to 7.

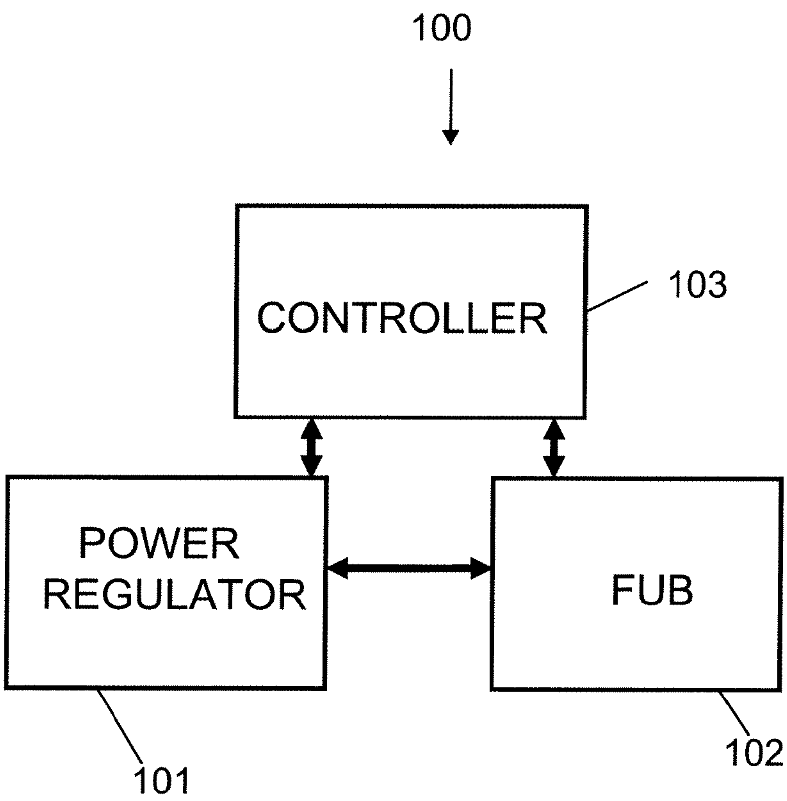


FIG. 1

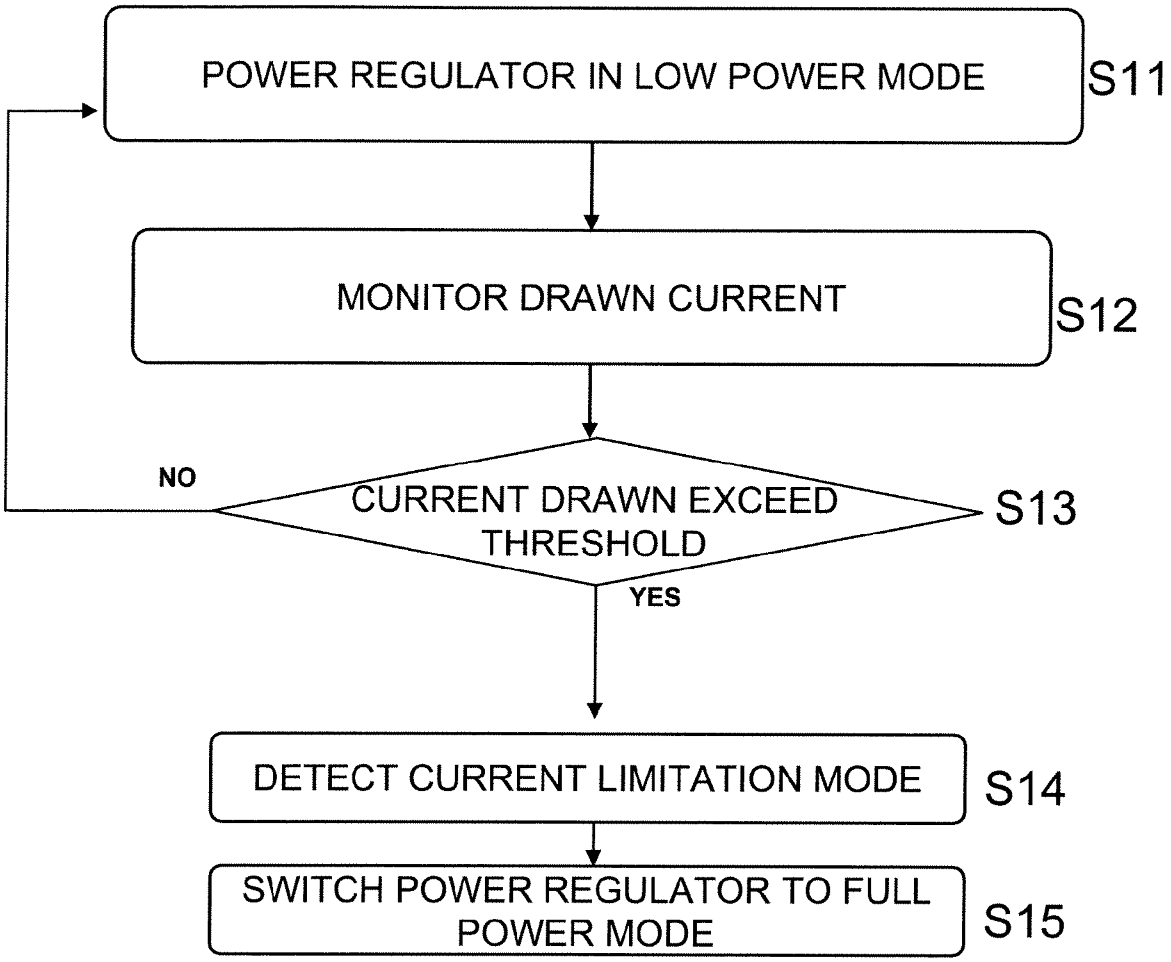
POWER REGULATOR IN LOW POWER MODE
S11
MONITOR DRAWN CURRENT
S12
NO
CURRENT DRAWN EXCEED THRESHOLD
S13
YES
DETECT CURRENT LIMITATION MODE
S14
SWITCH POWER REGULATOR TO FULL POWER MODE
S15

FIG. 2

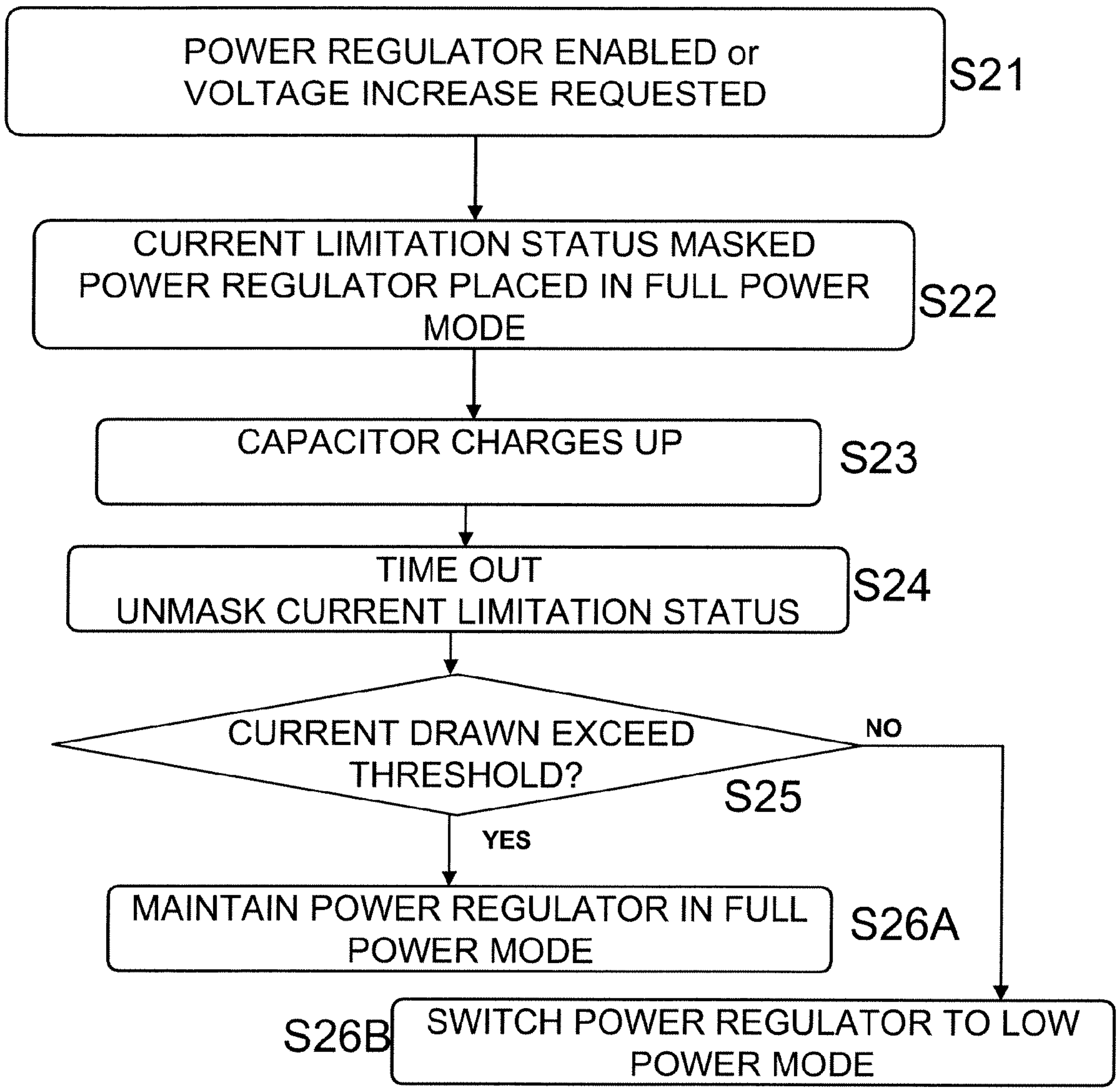

POWER REGULATOR ENABLED or
VOLTAGE INCREASE REQUESTED
S21
CURRENT LIMITATION STATUS MASKED
POWER REGULATOR PLACED IN FULL POWER MODE
S22
CAPACITOR CHARGES UP
S23
TIME OUT
UNMASK CURRENT LIMITATION STATUS
S24
CURRENT DRAWN EXCEED THRESHOLD?
S25
NO
YES
MAINTAIN POWER REGULATOR IN FULL POWER MODE
S26A
S26B
SWITCH POWER REGULATOR TO LOW POWER MODE


FIG. 3

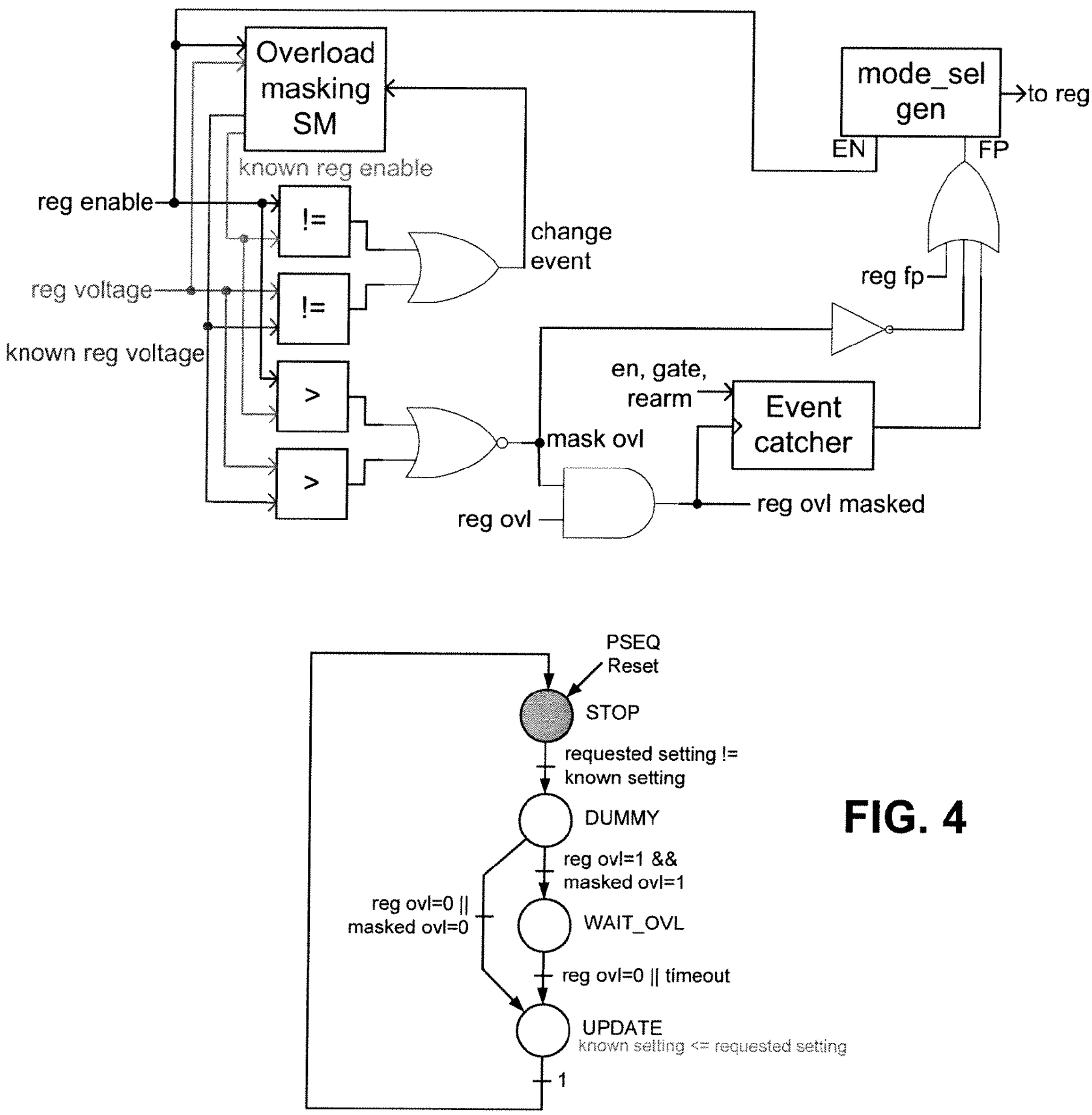
Overload masking SM
mode_sel gen
to reg
EN
FP
known reg enable
reg enable
!=
!=
change event
reg voltage
known reg voltage
reg fp
en, gate, rearm
Event catcher
>
>
mask ovl
reg ovl
reg ovl masked
PSEQ Reset
STOP
requested setting != known setting
DUMMY
reg ovl=1 && masked ovl=1
reg ovl=0 || masked ovl=0
WAIT_OVL
reg ovl=0 || timeout
UPDATE
known setting <= requested setting
1

FIG. 4

Europäisches Patentamt
European Patent Office
Office européen des brevets

# EUROPEAN SEARCH REPORT

Application Number
EP 09 30 5799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 944 826 A (KOCKS MICHAEL [DE] ET AL) 31 August 1999 (1999-08-31)<br>* the whole document *<br>----- | 1-16 | INV.<br>G06F1/26<br>G06F1/32 |
| A | WO 02/056159 A (KONINKL PHILIPS ELECTRONICS NV [NL]) 18 July 2002 (2002-07-18)<br>* page 1, line 4 - page 1, line 16 *<br>----- | 1-16 | |
| A | US 5 740 087 A (SMENTEK DAVID R [US] ET AL) 14 April 1998 (1998-04-14)<br>* column 1, line 20 - column 1, line 28 *<br>* column 1, line 45 - column 1, line 47 *<br>----- | 1-16 | |

TECHNICAL FIELDS SEARCHED (IPC)

G06F
G05F

The present search report has been drawn up for all claims

1

| Place of search | Date of completion of the search | Examiner |
|---|---|---|
| Berlin | 22 January 2010 | Leineweber, Hubert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 30 5799

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2010

| Patent document cited in search report | Publication date | Patent family member(s) | Publication date |
|---|---|---|---|
| US 5944826 A | 31-08-1999 | DE 19608776 A1 | 11-09-1997 |
| | | EP 0795829 A2 | 17-09-1997 |
| | | JP 10063390 A | 06-03-1998 |
| WO 02056159 A | 18-07-2002 | JP 2004518194 T | 17-06-2004 |
| | | US 2002108068 A1 | 08-08-2002 |
| US 5740087 A | 14-04-1998 | NONE | |

EPO FORM P0459

For more details about this annex : see Official Journal of the European Patent Office, No. 12/82